# EUROPEAN PATENT APPLICATION

(11) **EP 3 719 641 A1**
(43) Date of publication of application: **07.10.2020**
(21) Application number: 18883429.5
(22) Date of filing: 13.11.2018
(51) Int. Cl.: G06F 9/445

(54) **ENERGY STORAGE SYSTEM STARTUP METHOD AND ENERGY STORAGE DEVICE**

(30) Priority: 28.11.2017 CN 201711216341
(71) Applicant: BYD Company Limited, Shenzhen, Guangdong 518118 (CN)
(72) Inventor: HUANG, Rao, Shenzhen Guangdong 518118 (CN)
(74) Representative: m patent group
(86) International application number: PCT/CN2018/115247
(87) International publication number: WO 2019/105221

(57) **Abstract**

The present disclosure relates to a starting method of an energy storage system and an energy storage device. The method includes a system recovery process. The system recovery process includes: detecting a state of a target file in a starting process of the energy storage system, wherein the target file is a file required for normal starting of the energy storage device; when the state of the target file is a missing state or a corrupted state, updating the target file according to a system upgrading installation file stored in a configuration region of the energy storage system; re-detecting the state of the target file, and if the state of the target file is normal, completing starting of the energy storage system.

## Description

### CROSS-REFERENCE TO RELATED APPLICATIONS

This application claims priority to Chinese Patent Application No. "201711216341.2", entitled "Starting Method of Energy Storage System, Energy Storage Device and Energy Storage Medium", filed on November 28, 2011 by BYD Company Limited.

### FIELD

The present application relates to the field of energy storage, and particularly relates to a starting method of an energy storage system, and an energy storage device.

### BACKGROUND

With the development of energy storage technology, energy storage devices have been widely applied. The energy storage devices can be put in different positions according to different application scenarios. For example, the energy storage device is put at home of a user to be used as a household energy storage device, or put on a remote or sparsely populated mountaintop or a warehouse to be used as a distributive energy source device, and the like.

In the related art, if a problem occurs in an upgrading or running process of the energy storage device, or a fault occurs due to artificial damage, a technician needs to reach the site for repair or factory return repair is needed, so that the technical problem of maintenance inconvenience of the energy storage device exists in the related art.

### SUMMARY

In order to overcome the problems in the related art, the present disclosure provides a starting method of an energy storage system, an energy storage device and a storage medium.

According to a first aspect, the present disclosure provides a starting method of an energy storage system. The method includes a system recovery process. The system recovery process includes: detecting a state of a target file in a starting process of the energy storage system, wherein the target file is a file required for normal starting of the energy storage device; when the state of the target file is a missing state or a corrupted state, updating the target file according to a system upgrading installation file stored in a configuration region of the energy storage system; re-detecting the state of the target file, and if the state of the target file is normal, completing starting of the energy storage system.

Optionally, before the system recovery process, a system upgrading process is set, and the system upgrading process includes:
acquiring the system upgrading installation file;
upgrading the energy storage system according to the system upgrading installation file; and
after upgrading of the energy storage system succeeds, storing the system upgrading installation file into the configuration region of the energy storage system.

Optionally, after the system upgrading installation file is acquired, the method further includes:
verifying completeness and correctness of the system upgrading installation file;
when the verification of the system upgrading installation file fails, reacquiring the system upgrading installation file; and
when the verification of the system upgrading installation file succeeds, upgrading the energy storage system according to the system upgrading installation file.

Optionally, the system recovery process further includes:
after the state of the target file is re-detected, when the state of the target file is the missing state or the corrupted state, updating the target file according to a factory configuration system file of the energy storage system.

Optionally, after the energy storage system is upgraded according to the system upgrading installation file, the method further includes:
restarting the energy storage system after upgrading of the energy storage system fails.

Optionally, after the energy storage system is started, the method further includes:
cyclically detecting a running state of the target file of the energy storage system according to a preset period; and
when an abnormal running state of the target file is detected, updating the target file according to the system upgrading installation file stored in the configuration region of the energy storage system.

Optionally, after the target file is updated according to the system upgrading installation file stored in the configuration region of the energy storage system, the method further includes:
re-detecting the running state of the target file; and
if the running state of the target file is abnormal, updating the target file according to the factory configuration system file of the energy storage system.

According to a second aspect, the present disclosure provides a starting method of an energy storage system, and the method includes:
in a running process of the energy storage system, cyclically detecting a running state of a target file of the energy storage system according to a preset period; and
if it is detected that the running state of the target file is an abnormal state, updating the target file according to a system upgrading installation file stored in a configuration region of the energy storage system.

Optionally, after the target file is updated according to the system upgrading installation file stored in the configuration region of the energy storage system, the method further includes:
re-detecting the running state of the target file; and
if the running state of the target file is abnormal, updating the target file according to a factory configuration system file of the energy storage system.

According to a third aspect, the present disclosure provides an energy storage device, and the energy storage device includes:
a first detection module, configured to detect a state of a target file in a starting process of an energy storage system, wherein the target file is a file required for normal starting of the energy storage device;
a first processing module, configured to update the target file according to a system upgrading installation file stored in a configuration region of the energy storage system when the state of the target file is a missing state or a corrupted state; and
a first starting module, configured to complete starting of the energy storage system when the normal state of the target file is re-detected.

Optionally, the energy storage device further includes:
a first acquisition module, configured to acquire the system upgrading installation file;
a first upgrading module, configured to upgrade the energy storage system according to the system upgrading installation file; and
a storage module, configured to store the system upgrading installation file into the configuration region of the energy storage system after upgrading of the energy storage system succeeds.

Optionally, the energy storage device further includes:
a verification module, configured to verify completeness and correctness of the system upgrading installation file;
a second acquisition module, configured to reacquire the system upgrading installation file when the verification of the system upgrading installation file fails; and
a second upgrading module, configured to upgrade the energy storage system according to the system upgrading installation file when the verification of the system upgrading installation file succeeds.

Optionally, the energy storage device further includes:
a second detection module, configured to re-detect the state of the target file after the first processing module updates the target file; and
a second processing module, configured to update the target file according to the factory configuration system file of the energy storage system when the state of the target file is the missing state or the corrupted state;

Optionally, the energy storage device further includes:
a second starting module, configured to restart the energy storage system after upgrading of the energy storage system fails.

Optionally, the energy storage device further includes:
a third detection module, configured to cyclically detect the running state of the target file of the energy storage system according to a preset period; and
a third processing module, configured to update the target file according to the system upgrading installation file stored in the configuration region of the energy storage system when the abnormal running state of the target file is detected.

Optionally, the energy storage device further includes:
a fourth detection module, configured to re-detect the running state of the target file after the third processing module updates the target file; and
a fourth processing module, configured to update the target file according to the factory configuration system file of the energy storage system if the running state of the target file is abnormal.

According to a fourth aspect, the present disclosure provides an energy storage device, and the energy storage device includes:
a first detection module, configured to cyclically detect a running state of a target file of an energy storage system according to a preset period in a running process of the energy storage system; and
a first processing module, configured to update the target file according to a system upgrading installation file stored in a configuration region of the energy storage system when the abnormal running state of the target file is detected.

Optionally, the energy storage device further includes:
a second detection module, configured to re-detect the running state of the target file after the first processing module updates the target file; and
a second processing module, configured to update the target file according to the factory configuration system file of the energy storage system if the running state of the target file is abnormal.

Through the above technical solutions, in the starting process of the energy storage system, if missing or corruption of the target file is detected, the target file is updated according to the system upgrading installation file stored in the configuration region so as to automatically recover the energy storage system of the energy storage device, thereby reducing a manual repair cost and reducing a factory return repair rate of the device.

Additionally, in the running process of the energy storage device, the running state of the target file of the energy storage system is cyclically detected. When the target file with an abnormal running state is detected, the target file is updated through the system upgrading installation file stored in the configuration region of the energy storage system so as to realize automatic recovery of the energy storage system, and manual repair is not needed.

Other features and advantages of the present disclosure will be described in detail in the following detailed description.

### BRIEF DESCRIPTION OF THE DRAWINGS

The accompanying drawings are provided to further understand the present disclosure, and they constitute a part of the application. The accompanying drawings, along with the detailed description below, are used to explain the present disclosure, and pose no limitation on the present disclosure. In the figures:
FIG. 1 is a flowchart of a system recovery process according to an exemplary embodiment of the present disclosure.
FIG. 2 is a schematic connection diagram of an energy storage device with other electronic devices according to an embodiment of the present disclosure.
FIG. 3 is a flowchart of upgrading an energy storage system according to an exemplary embodiment of the present disclosure.
FIG. 4 is a flowchart of realizing system automatic recovery during starting of an energy storage system according to an exemplary embodiment of the present disclosure.
FIG. 5 is a flowchart of a monitoring daemon method according to an exemplary embodiment of the present disclosure.
FIG. 6 is a schematic software architecture diagram of an energy storage device according to an exemplary embodiment of the present disclosure.
FIG. 7 is a schematic diagram of an energy storage device according to an exemplary embodiment of the present disclosure.
FIG. 8 is a flowchart of a starting method of an energy storage system according to an exemplary embodiment of the present disclosure.
FIG. 9 is a schematic diagram of an energy storage device according to an exemplary embodiment of the present disclosure.

### DETAILED DESCRIPTION

The following describes specific embodiments of the present disclosure in detail with reference to the accompanying drawings. It should be understood that the specific implementations described herein are merely used to describe and explain the present disclosure but are not intended to limit the present disclosure.

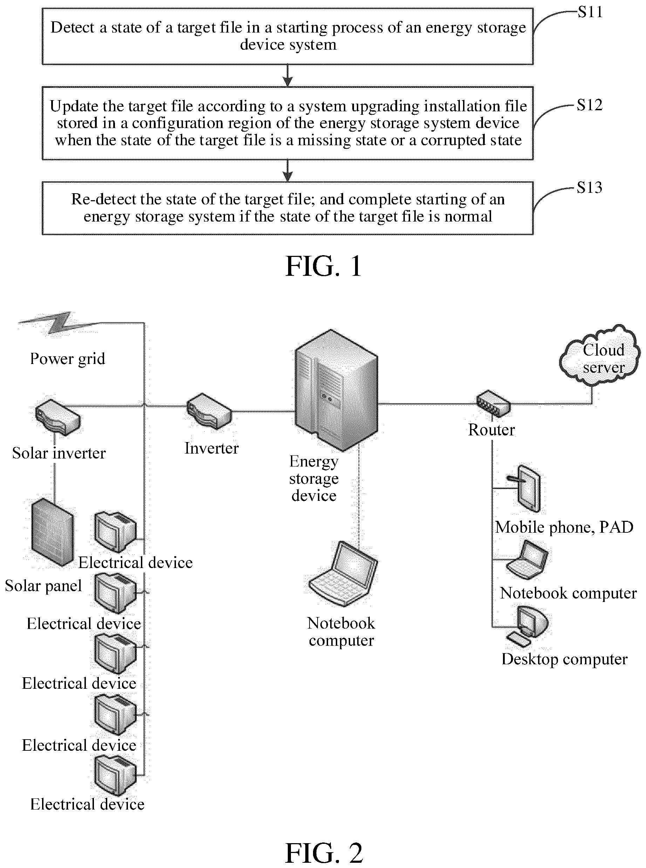

The present disclosure provides a starting method of an energy storage system. The method includes a system recovery process. FIG. 1 is a flowchart of the system recovery process of the present disclosure. The method includes the following steps.

In step S11, in a starting process of the energy storage system, a state of a target file is detected, and the target file is a file required for normal starting of an energy storage device.

In the present disclosure, the energy storage system may be a system of the energy storage device. The starting process of the energy storage system may include one of the following: a restarting process of the energy storage system after completing system upgrading, a restarting repair process performed when the energy storage system generates a fault in a running process, and a starting process when a starting key of the energy storage device is pressed down. Certainly, the starting process of the energy storage system may also include device starting under other conditions, but examples are not listed one by one herein.

The energy storage system may run an automatic recovery initialization script in each starting process. The script can traverse the target file in the energy storage system so as to detect the state of the target file. The target file is a file required by the energy storage system in the starting process. If the target file has a problem, the energy storage device cannot be normally powered on and started. The target file may include an energy storage management file and a starting file, and may also include key files in other energy storage systems.

In step S12, when a state of the target file is a missing state or a corrupted state, the target file is updated according to a system upgrading installation file stored in a configuration region of the energy storage system.

In the present disclosure, the configuration region exists in the energy storage system. The configuration region stores the system upgrading installation file of the energy storage system, and may also store other files, such as a factory configuration system file of the energy storage system. In the starting process of the energy storage system, if the target file missing or corruption is detected, the energy storage device can automatically perform a recovery operation according to the system upgrading installation file, that is, update the target file. Updating of the target file may be completed by reinstalling the energy storage system according to the system upgrading installation file, may also be completed by covering the target file according to the system upgrading installation file, or may be completed in other modes, and the present disclosure is not limited thereto.

In step S13, the state of the target file is re-detected, and starting of the energy storage system is completed if the state of the target file is normal.

In the present disclosure, after the target file is updated, the state of the target file may be re-detected so as to ensure that the target file required for normal starting of the energy storage system is in a normal state, starting of the energy storage system is completed when the state of the target file is normal, and the energy storage system enters a normal running state.

As shown in FIG. 2, a schematic connection diagram of the energy storage device with other electronic devices, the energy storage device may be connected with a router through Ethernet, and network communication of the energy storage device is realized. The energy storage device may be communicated with a local area network device connected to the same router as the energy storage device, such as a mobile phone, a notebook computer and a desktop computer connected to the same router. The energy storage device may be accessed into a wide area network through the router to be connected with a cloud server. Besides being connected with the router, the energy storage device may also be directly connected with electronic devices such as a notebook computer through an Internet access. The energy storage device may also be connected with an inverter, the inverter may also be connected with other electrical devices, and a relationship among the energy storage device and other electrical devices is built through the inverter. The inverter may be an inverter in various forms, such as a solar inverter as shown in FIG. 2, and may also be a wind energy inverter, and the like.

Optionally, the method of the present disclosure further includes a system upgrading process: acquiring the system upgrading installation file; upgrading the energy storage system according to the system upgrading installation file; and after upgrading of the energy storage system succeeds, storing the system upgrading installation file into the configuration region of the energy storage system.

In the present disclosure, the system upgrading installation file may be acquired from electronic devices connected with the energy storage device. The electronic devices connected with the energy storage device may be a cloud server connected with the energy storage device, a local area network device connected to the same router as the energy storage device, an electronic device directly connected with an Internet access of the energy storage device, and an inverter connected with the energy storage device.

The system upgrading installation file may be acquired in the following three modes:
a first mode: downloading the system upgrading installation file through the cloud server connected with the energy storage device;
a second mode: uploading the system upgrading installation file through a browser of the local area network device connected to the same router as the energy storage device or the electronic device directly connected with the energy storage device; and
a third mode: issuing the system upgrading installation file by the inverter connected with the energy storage device.

After the system upgrading installation file is acquired, the energy storage system is upgraded. After upgrading of the energy storage system succeeds, the system upgrading installation file is stored in the configuration region of the energy storage device. The configuration region is configured to store configuration files of the energy storage system and back up the system upgrading installation file. No files in the configuration region can be changed in the upgrading process of the energy storage system, so that the files in the configuration region are prevented from being corrupted in the upgrading process of the energy storage system, wherein the files in the configuration region are all in a binary form, and a file header includes checking information, so that a system fault caused by random change of the files is avoided. The system upgrading installation file stored in the configuration region may be configured to update the target file subsequently when target file missing or corruption occurs.

Optionally, in order to ensure availability of the system upgrading installation file, after the system upgrading installation file is acquired, the method further includes: verifying completeness and correctness of the system upgrading installation file; reacquiring the system upgrading installation file when the verification of the system upgrading installation file fails; and upgrading the energy storage system according to the system upgrading installation file when the verification of the system upgrading installation file succeeds.

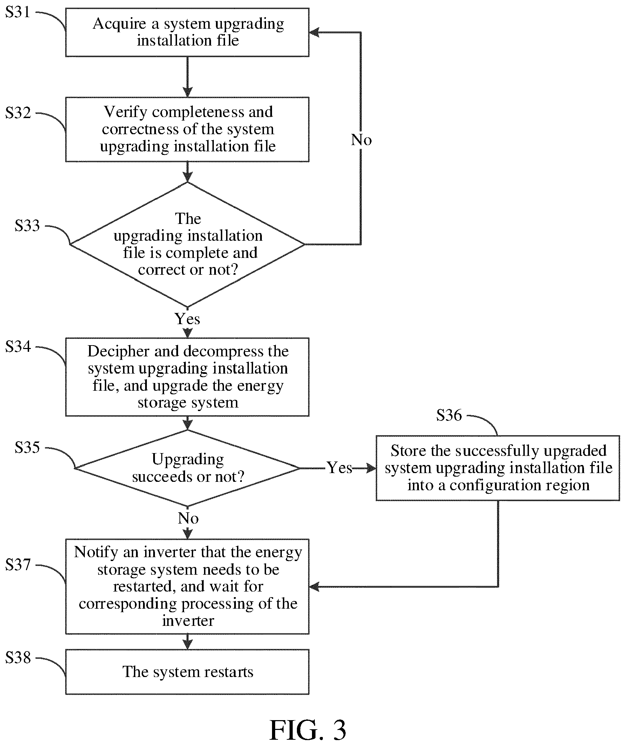

In order to better understand the upgrading process of the energy storage system, the upgrading process of the energy storage device will be illustrated by taking the energy storage device connected with the inverter as an example. FIG. 3 is a flowchart of upgrading the energy storage system of the present disclosure. The following steps are included:
step S31, acquiring a system upgrading installation file;
step S32, verifying completeness and correctness of the system upgrading installation file, and returning verification results;
step S33, when the completeness verification result of the system upgrading installation file is COMPLETE, and the correctness verification result is CORRECT, executing step S34; and when the completeness verification result of the system upgrading installation file is NO, or the correctness verification result is NO, returning to step S31;
step S34, deciphering and decompressing the system upgrading installation file, upgrading the energy storage system, and returning an upgrading result;
step S35, when the upgrading result is SUCCEED, executing step S36; and when the upgrading result is FAIL, executing step S37;
step S36, storing the successfully upgraded system upgrading installation file into a configuration region;
step S37, notifying the inverter that the energy storage system needs to be restarted, and waiting for corresponding processing of the inverter; and
step S38, the system restarts.

Concretely, the system upgrading installation file may be acquired in any one of the above three modes, and a format of the system upgrading installation file may be set according to practical requirements. For example, the system upgrading installation file is a mirror image document, or the system upgrading installation file is a compressed file.

In order to ensure security and availability of the acquired system upgrading installation file, the system upgrading installation file needs to be subjected to correctness and completeness checking. Checking modes may include odd-even checking, cyclic redundancy checking, MD5 checking and Gray code checking, and the present disclosure is not limited thereto. Only when the checking results of the system upgrading installation file are COMPLETE and CORRECT, the system upgrading installation file can be deciphered and decompressed, and system file replacement is performed to complete an upgrading operation. When the checking result of the system upgrading installation file shows that the system upgrading installation file is incomplete or incorrect (for example, data incompleteness of the system upgrading installation file is caused by network outage in a transmission process of the system upgrading installation file), the system upgrading installation file needs to be reacquired.

After upgrading of the energy storage system succeeds, the successfully upgraded system upgrading installation file is stored into the configuration region so that the system recovery is performed in a subsequent device starting process. If upgrading of the energy storage system fails, the energy storage system needs to be restarted, wherein the energy storage device is connected with the inverter, and the inverter is configured to control a charging and discharging operation of the energy storage device. In order to ensure security, when the energy storage system needs to be restarted, the inverter needs to be notified, and the energy storage system can be restarted only after the inverter stops the charging and discharging operation on the energy storage device.

In the present disclosure, the energy storage device can detect the system upgrading installation file according to a preset time interval. In some embodiments of the present disclosure, for example, detection may performed once every 24 hours, and in some other embodiments of the present disclosure, the system upgrading installation file may be detected at a set time, for example, detection may be performed at six o'clock in the afternoon every day.

Optionally, the system recovery process further includes: after the state of the target file is re-detected, when the state of the target file is a missing state or a corrupted state, updating the target file according to a factory configuration system file of the energy storage system. That is, when the energy storage system cannot be recovered according to the system upgrading installation file, the energy storage system may be further recovered according to the factory configuration system file. The factory configuration system file of the energy storage system may be stored in the configuration region, and may also be stored in other positions of the energy storage device.

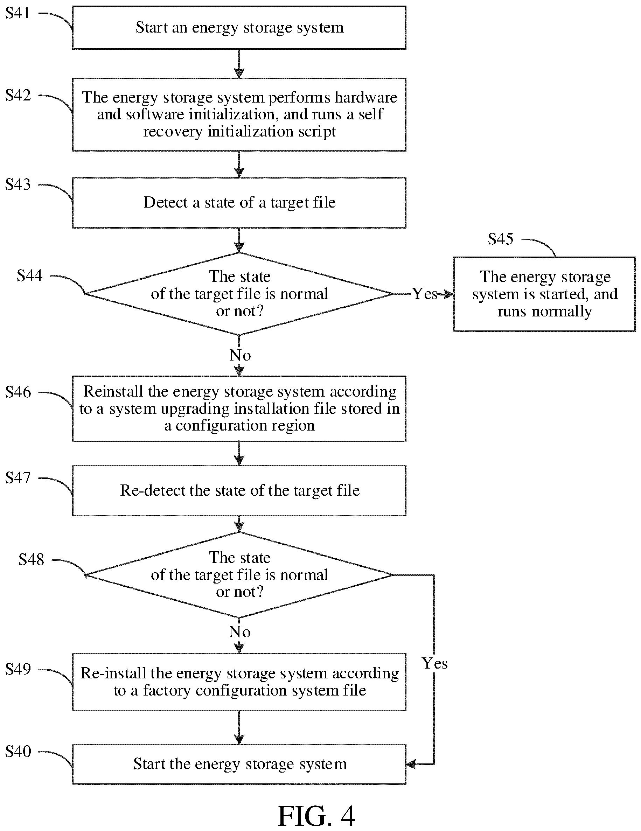

FIG. 4 is a flowchart of realizing system automatic recovery during starting of an energy storage system. The following steps may be included:
step S41, starting the energy storage system;
step S42, the energy storage system performs hardware and software initialization, running an automatic recovery initialization script which is configured to traverse a target file;
step S43, detecting a state of the target file, and returning a detection result;
step S44, when the detection result is that the state of the target file is normal, entering step S45, and when the detection result is that the state of the target file is a missing state or an abnormal state, entering step S46;
step S45, the energy storage system completes starting and runs normally;
step S46, reinstalling the energy storage system according to a system upgrading installation file stored in a configuration region;
step S47, re-detecting the state of the target file, and returning a detection result;
step S48, when a detection result is that the state of the target file is normal, entering step S40; and when the detection result is that the state of the target file is the missing state or the abnormal state, entering step S49;
step S49, reinstalling the energy storage system according to a factory configuration system file; and
step S40, starting the energy storage system.

In the present disclosure, the above steps may be executed regardless of restarting triggered by upgrading of the energy storage system, restarting triggered by a system fault or normal electrification starting of the energy storage system. In each starting process of the energy storage system, an automatic recovery initialization script will run for detecting the state of the target file of the energy storage system. When it is detected that the state of the target file is the missing state or a corrupted state, a system recovery operation may be automatically performed. The system recovery operation may be divided into two parts: 1. recovery according to the system upgrading installation file (such as the system upgrading installation file successfully upgraded in the last time) stored in the configuration region; and 2. recovery according to the factory configuration system file of the energy storage system when the system upgrading installation file is also corrupted. Dual backup is realized, and the energy storage system is ensured to be capable of automatically recovering running when generating a fault.

In the present disclosure, the target file may be updated according to the system upgrading installation file in the configuration region; the target file may also be updated according to the factory configuration system file; updating may also be performed according to the system upgrading installation file first, and after updating fails, the updating may be performed according to the factory configuration system file. The above methods may be selected according to practical requirements, and the present disclosure is not limited thereto.

Optionally, after the energy storage system is updated according to the system upgrading installation file, the method further includes: if upgrading of the energy storage system fails, restarting the energy storage system so as to detect the state of the target file during re-execution of the starting process of the energy storage system; when the state of the target file is the missing state or the corrupted state, updating the target file according to the system upgrading installation file stored in the configuration region of the energy storage device; and if the state of the target file is normal, completing the starting step of the energy storage system.

In the present disclosure, after upgrading of the energy storage system fails, in order to ensure automatic recovery capability of the energy storage system, the energy storage system needs to be restarted, a system recovery process in the present disclosure needs to be executed in the restarting process of the energy storage system, the target file is updated through the system upgrading installation file stored in the configuration region, and then the problem of system breakdown caused by system upgrading failure is effectively solved.

After upgrading of the energy storage system fails, the energy storage system is reinstalled according to the system upgrading installation file stored in the configuration region. The system upgrading installation file stored in the configuration region is a historical successfully upgraded system upgrading installation file, so that a version of the energy storage system reinstalled according to the system upgrading installation file is a historical system version.

In order to make the version of the energy storage system be a latest version, after the energy storage system is started, the method further includes: if the energy storage system normally starts, detecting whether the version of the system upgrading installation file in an electronic device connected with the energy storage device is identical to a current installation version of the energy storage system or not; and if the version of the system upgrading installation file in the electronic device is different from the current installation version of the energy storage system, reacquiring the system upgrading installation file from the electronic device.

In the present disclosure, the system upgrading installation file of the latest version of the energy storage system may be stored in electronic devices, such as a cloud server, an inverter, a notebook computer and a mobile phone, connected with the energy storage device. The energy storage device can compare current installation version information of the energy storage system with version information of the system upgrading installation file stored in the electronic device, and the version information may include information such as a file issuing time and a file version number. When the current installation version of the energy storage system is different from the version of the system upgrading installation file stored on the electronic device, the system upgrading installation file of the latest version is reacquired from the electronic device, and system upgrading is performed according to the system upgrading installation file of the latest version.

Optionally, after the energy storage system starts normally to run, in order to avoid some malicious modifications or corruptions on the system progress in the running process, monitoring daemon also needs to be performed. The monitoring daemon may include the following steps: cyclically detecting the running state of the target file of the energy storage system according to a preset period; and when the abnormal running state of the target file is detected, updating the target file according to the system upgrading installation file stored in the configuration region of the energy storage system.

The preset period may be set according to practical requirements. In some embodiments of the present disclosure, the preset period is 1 min, and the running state of the target file of the energy storage system is detected once every 1 min. When the running state of the target file is normal every time, a sleep period may be entered. The sleep period may be set according to practical requirements. In some embodiments of the present disclosure, the sleep period is 5s, and the detection on the running state of the target file is stopped in the sleep period. After the sleep period is completed, next-time detection is entered. When the running state of the target file is abnormal, the target file is updated according to the system upgrading installation file so as to automatically repair the energy storage system.

Optionally, after the target file is updated according to the system upgrading installation file in the configuration region of the energy storage system, the method further includes: re-detecting the running state of the target file; and updating the target file according to the factory configuration system file of the energy storage system if the running state of the target file is abnormal.

In the present disclosure, if the target file with the abnormal running state cannot be repaired by the system upgrading installation file, the target file is updated according to the factory configuration system file of the energy storage system. Dual backup is performed, so that the automatic recovery of the energy storage system is more reliable.

Additionally, when the running state of the target file is abnormal, the abnormal target file may also be restarted. After the restarting succeeds, next-time detection is entered. After the restarting fails, the energy storage system is restarted. In the starting process of the energy storage system, the target file is updated according to the system upgrading installation file. The state of the target file is re-detected. If the state of the target file is normal, starting of the energy storage system is completed. If the state of the target file is the missing state or the corrupted state, the target file is updated according to the factory configuration system file of the energy storage system.

Therefore, through the above method, the faults occurring in the running process of the energy storage system are effectively solved, and the monitoring daemon on the energy storage device is realized.

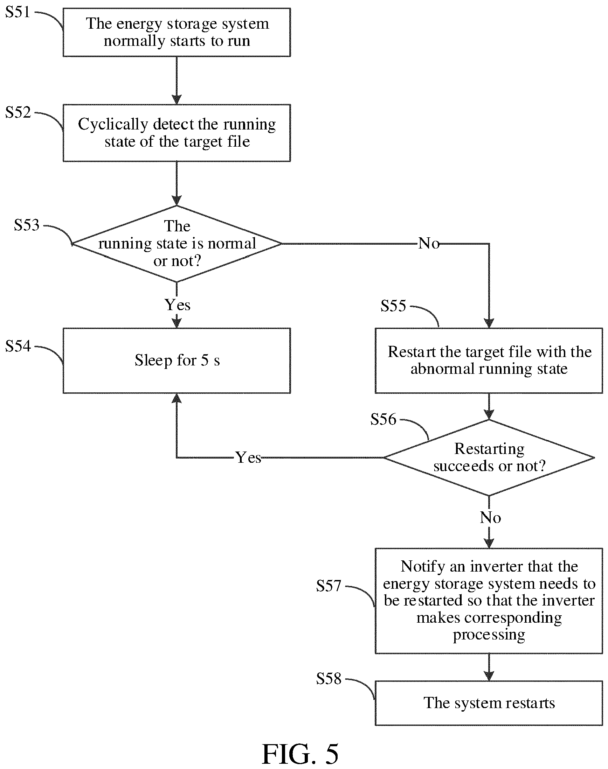

In order to better understand a monitoring daemon method of an energy storage system, the monitoring daemon method will be illustrated hereafter by taking the energy storage device connected with the inverter as an example. FIG. 5 is a flowchart of the monitoring daemon method of the present disclosure. The method may include the following steps:
step S51, an energy storage system starts normally to run;
step S52, cyclically detecting a running state of a target file, and returning a detection result;
step S53, if the detection result is NORMAL, entering step S54; and if the detection result is ABNORMAL, entering step S55;
step S54, after sleep for 5s, skipping to step S52 to continuously enter a next-time cyclic detection;
step S55, restarting the target file with the abnormal running state, and returning a restarting result;
step S56, if the restarting result is SUCCEED, entering step S55; and if the restarting result is FAIL, entering step S57;
step S57, notifying an inverter that the energy storage system needs to be restarted so that the inverter does corresponding processing; and
step S58, the system restarts.

In the present disclosure, after the energy storage device starts normally to run, the monitoring daemon is realized by cyclically detecting the running state of the target file. When the target file with the abnormal running state is detected, first, an operation of restarting the target file is executed. When the abnormality cannot be eliminated by restarting the target file, the energy storage system is restarted so as to update the target file according to the system upgrading installation file and a factory configuration system file in the restarting process of the energy storage system so as to repair a fault occurring during system running.

Certainly, the present disclosure may also monitor the running state of all file progresses during running of the energy storage system. When a progress with running abnormality is detected, the abnormal progress is restarted. If the restarting fails, the energy storage system may be further reinstalled according to the system upgrading installation file and the factory configuration system file so as to realize automatic recovery of the energy storage system.

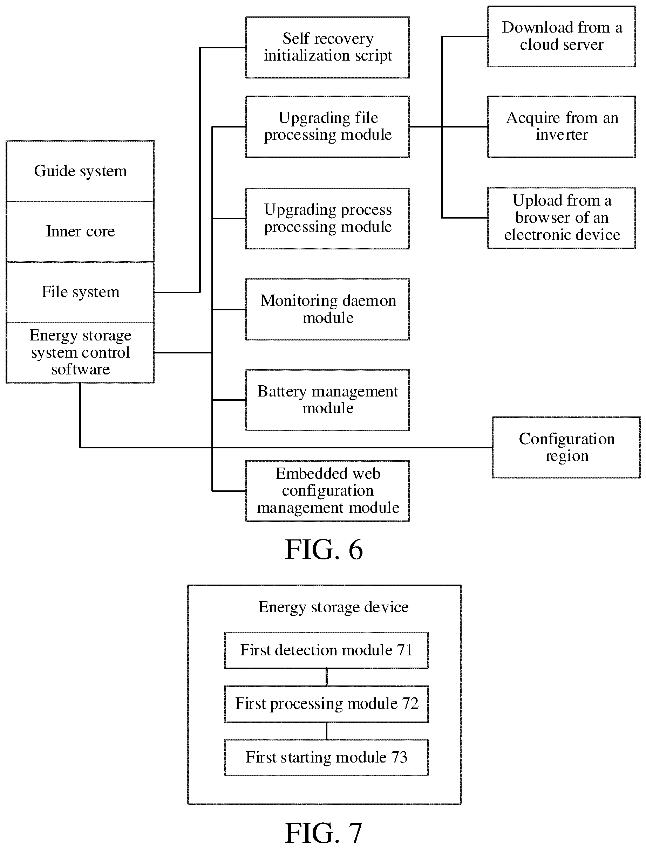

FIG. 6 is a schematic software architecture diagram of the energy storage device of the present disclosure. The starting method of the energy storage system provided by the present disclosure may be applied to a software architecture. An integral framework of the energy storage system of the energy storage device may be divided into four layers, the first layer is a guide system, the second layer is an inner core, a third layer is a file system, and a fourth layer is energy storage system control software.

After the energy storage device is electrified to be started, the first-layer guide system first runs. Then, the operation skips to the second-layer inner core to perform initialization processing on all hardware of the energy storage device. Next, the operation skips to the third-layer file system to perform initialization processing on software of the energy storage system and to run an automatic recovery initialization script. Finally, the fourth layer runs, and the energy storage system controls all software to run.

The four-layer energy storage system control software may include following five modules:
an upgrading file processing module, configured to acquire the system upgrading installation file (including downloading from a cloud server, acquisition from an inverter, and uploading from a browser of an electronic device) and to perform completeness and correctness checking on the acquired system upgrading installation file;
an upgrading process processing module, configured to complete an updating operation of the energy storage system according to the system upgrading installation file checked by the upgrading file processing module, and to determine whether the system upgrading installation file is backed up to the configuration region or not according to an updating result;
a monitoring daemon module, configured to detect the running state of a system progress after the energy storage device is normally electrified to run, and to implement a corresponding processing mechanism when detecting a system progress with an abnormal running state;
a battery management module, configured to be communicated with the inverter, and to notify the inverter to stop a charging and discharging operation on the energy storage device when the energy storage device needs to be restarted; and
an embedded web configuration management module, configured to provide a user interface page of the energy storage device, wherein through the user interface page, configuration on the energy storage device, such as uploading of the system upgrading installation file, may be realized.

Besides the above five modules, the fourth layer of the software framework of the energy storage device further includes a configuration region configured to store files such as the configuration file, the system upgrading installation file and the factory configuration system file of the energy storage system.

The first three layers of the software framework of the energy storage device are unchanged after factory delivery of a product so as to ensure that basic functions of the device cannot be damaged after the factory delivery. The fourth layer is used for later-period maintenance and updating, and a perfect recovery mechanism is made, so that the starting method of the energy storage system provided by the present disclosure is realized. Certainly, the functions of each layer may be set according to practical requirements, and are not specifically limited by the present disclosure.

FIG. 7 is a schematic diagram of the energy storage device of the present disclosure. The energy storage device includes:
a first detection module 71, configured to detect a state of a target file in a starting process of the energy storage system, wherein the target file is a file required for normal starting of the energy storage device;
a first processing module 72, configured to update the target file according to a system upgrading installation file in a configuration region of the energy storage system when the state of the target file is a missing state or a corrupted state; and
a first starting module 73, configured to complete starting of the energy storage system when the normal state of the target file is re-detected.

Optionally, the energy storage device further includes:
a first acquisition module, configured to acquire a system upgrading installation file;
a first upgrading module, configured to upgrade the energy storage system according to the system upgrading installation file; and
a storage module, configured to store the system upgrading installation file into the configuration region of the energy storage system after upgrading of the energy storage system succeeds.

Optionally, the energy storage device further includes:
a verification module, configured to verify completeness and correctness of the system upgrading installation file;
a second acquisition module, configured to reacquire the system upgrading installation file when verification of the system upgrading installation file fails; and
a second upgrading module, configured to upgrade the energy storage system according to the system upgrading installation file when the verification of the system upgrading installation file succeeds.

Optionally, the energy storage device further includes:
a second detection module, configured to re-detect the state of the target file after the first processing module updates the target file; and
a second processing module, configured to update the target file according to the factory configuration system file of the energy storage system when the state of the target file is the missing state or the corrupted state.

Optionally, the energy storage device further includes:
a second starting module, configured to restart the energy storage system after upgrading of the energy storage system fails.

Optionally, the energy storage device further includes:
a third detection module, configured to cyclically detect the running state of the target file of the energy storage system according to a preset period; and
a third processing module, configured to update the target file according to the system upgrading installation file stored in the configuration region of the energy storage system when the abnormal running state of the target file is detected.

Optionally, the energy storage device further includes:
a fourth detection module, configured to re-detect the running state of the target file after the third processing module updates the target file; and
a fourth processing module, configured to update the target file according to the factory configuration system file if the running state of the target file is abnormal.

Based on the same invention idea, the present disclosure further provides a computer storage medium. A computer program instruction is stored on the computer storage medium. The steps of the starting method of the above energy storage system are realized when the program instruction is executed by a processor.

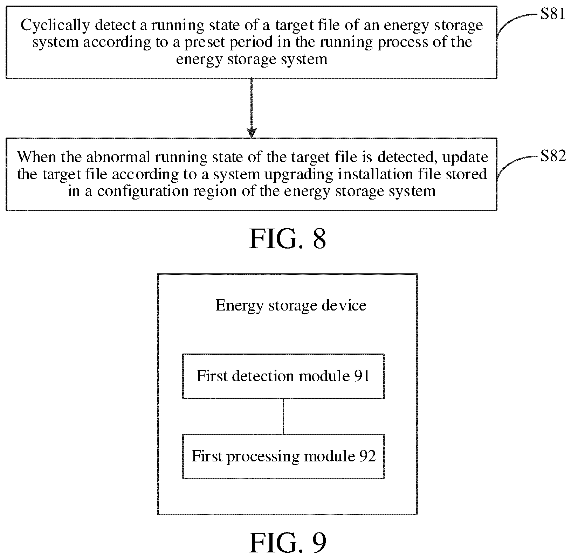

FIG. 8 is a flowchart of a starting method of an energy storage system of the present disclosure. The method includes:
in step S81, in a running process of the energy storage system, a running state of a target file of the energy storage system is cyclically detected according to a preset period; and
in step S82, if an abnormal running state of the target file is detected, the target file is updated according to a system upgrading installation file in a configuration region of the energy storage system.

In the running process of the energy storage system, in order to avoid some malicious modifications or corruptions of a system progress in the running process, monitoring daemon needs to be performed on the energy storage system. In the present disclosure, the monitoring daemon is realized by cyclically detecting the running state of the target file of the energy storage system. The preset period may be set according to practical requirements. In some embodiments of the present disclosure, the preset period is 1 min, and the running state of the target file of the energy storage system is detected once every 1 min. When the running state of the target file is normal every time, a sleep period may be entered. The sleep period may be set according to practical requirements. In some embodiments of the present disclosure, the sleep period may be 5s, and the detection on the running state of the target file is stopped in the sleep period. After the sleep period is completed, next-time detection is entered. When the running state of the target file is abnormal, for example, a state such as fault, corruption, malicious modification and quitting occurs, the target file is updated according to the system upgrading installation file so as to automatically repair the energy storage system.

Optionally, after the target file is updated according to the system upgrading installation file stored in the configuration region of the energy storage system, the method further includes: re-detecting the running state of the target file; and if the running state of the target file is abnormal, updating the target file according to the factory configuration system file of the energy storage system.

In the present disclosure, if the target file with the abnormal running state cannot be repaired by the system upgrading installation file, the target file is updated according to the factory configuration system file of the energy storage system. Dual backup is performed, so that the automatic recovery of the energy storage system is more reliable.

Additionally, if the running state of the target file is abnormal, the abnormal target file may also be restarted. After restarting of the target file succeeds, next-time detection is entered. Additionally, if restarting of the target file fails, or the running state is still abnormal, the energy storage system is restarted at this moment. In the starting process of the energy storage system, the target file required in the starting process may be traversed by running an automatic recovery initialization script. When a missing or corrupted target file is detected, the target file is updated through the system upgrading installation file (such as the system upgrading installation file and the factory configuration system upgrading installation file) stored in the configuration region. In order to ensure availability of the system upgrading installation file in the configuration region, the system upgrading installation file in the configuration region will not be changed in a reinstalling process of the energy storage system. If the target file with the abnormal running state cannot be repaired by the system upgrading installation file, the target file is updated according to the factory configuration system file of the energy storage system.

In order to better understand monitoring daemon of the energy storage system in the present disclosure, the monitoring daemon may include the following steps:
step 1: detecting a running state of a target file in a running process of the energy storage system;
step 2: judging whether the target file with an abnormal running state is detected or not; if so, executing step 3; and if not, executing step 6;
step 3: restarting the target file with the abnormal running state;
step 4: judging whether restarting of the target file with the abnormal running state succeeds or not; if so, executing step 6; and if not, executing step 5;
step 5: restarting the energy storage system; and
step 6: entering a sleep period, and executing step 1 after the sleep period is completed.

In order to save power consumption of the energy storage device, the sleep period may be set according to practical requirements, such as 5s or 6s. It should be understood that the sleep period may be a period for controlling the energy storage system to be in a sleep state, and may also be a period for stopping detection on the running state of the system progress, and the present disclosure is not limited thereto.

As shown in FIG. 9, which is an energy storage device of the present disclosure, the energy storage device includes:
a first detection module 91, configured to cyclically detect a running state of a target file of an energy storage system according to a preset period in a running process of the energy storage system; and
a first processing module 92, configured to update the target file according to a system upgrading installation file stored in a configuration region of the energy storage system when the abnormal running state of the target file is detected.

Optionally, the energy storage device further includes:
a second detection module, configured to re-detect the running state of the target file after the first processing module updates the target file; and
a second processing module, configured to update the target file according to the factory configuration system file of the energy storage system if the running state of the target file is abnormal.

Based on the same invention idea, the present disclosure further provides a computer storage medium. A computer program instruction is stored on the computer storage medium. The steps of the starting method of the above energy storage system are realized when the program instruction is executed by a processor.

The preferred embodiments of the present disclosure are described in detail above with reference to the accompanying drawings, but the present disclosure is not limited to the specific details in the above embodiments. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A starting method of an energy storage system, comprising a system recovery process, wherein the system recovery process comprises:
detecting a state of a target file in a starting process of the energy storage system, wherein the target file is a file required for normal starting of an energy storage device;
when the state of the target file is a missing state or a corrupted state, updating the target file according to a system upgrading installation file stored in a configuration region of the energy storage system; and
re-detecting the state of the target file, and if the state of the target file is normal, completing starting of the energy storage system.

2. The starting method of an energy storage system according to claim 1, wherein before the system recovery process, a system upgrading process is set, and the system upgrading process comprises:
acquiring the system upgrading installation file;
upgrading the energy storage system according to the system upgrading installation file; and
after upgrading of the energy storage system succeeds, storing the system upgrading installation file into the configuration region of the energy storage system.

3. The starting method of an energy storage system according to claim 2, wherein after the system upgrading installation file is acquired, the method further comprises:
verifying completeness and correctness of the system upgrading installation file;
when verification of the system upgrading installation file fails, reacquiring the system upgrading installation file; and
when verification of the system upgrading installation file succeeds, upgrading the energy storage system according to the system upgrading installation file.

4. The starting method of an energy storage system according to claim 1, wherein the system recovery process further comprises:
after the state of the target file is re-detected, when the state of the target file is a missing state or a corrupted state, updating the target file according to a factory configuration system file of the energy storage system.

5. The starting method of an energy storage system according to claim 2 or 3, wherein after the energy storage system is upgraded according to the system upgrading installation file, the method further comprises:
restarting the energy storage system after upgrading of the energy storage system fails.

6. The starting method of an energy storage system according to claim 1 or 2, wherein after the energy storage system is started, the method further comprises:
cyclically detecting a running state of the target file of the energy storage system according to a preset period; and
when an abnormal running state of the target file is detected, updating the target file according to the system upgrading installation file stored in the configuration region of the energy storage system.

7. The starting method of an energy storage system according to claim 6, wherein after the target file is updated according to the system upgrading installation file stored in the configuration region of the energy storage system, the method further comprises:
re-detecting the running state of the target file; and
if the running state of the target file is abnormal, updating the target file according to the factory configuration system file of the energy storage system.

8. A starting method of an energy storage system, comprising:
in a running process of the energy storage system, cyclically detecting a running state of a target file of the energy storage system according to a preset period; and
when it is detected that the running state of the target file is an abnormal state, updating the target file according to a system upgrading installation file stored in a configuration region of the energy storage system.

9. The starting method of an energy storage system according to claim 8, wherein after the target file is updated according to the system upgrading installation file in the configuration region of the energy storage system, the method further comprises:
re-detecting the running state of the target file; and
if the running state of the target file is abnormal, updating the target file according to a factory configuration system file of the energy storage system.

10. An energy storage device, wherein the energy storage device comprises:
a first detection module, configured to detect a state of a target file in a starting process of an energy storage system, wherein the target file is a file required for normal starting of the energy storage device;
a first processing module, configured to update the target file according to a system upgrading installation file stored in a configuration region of the energy storage system when the state of the target file is a missing state or a corrupted state; and
a first starting module, configured to complete starting of the energy storage system when the normal state of the target file is re-detected.

11. The energy storage device according to claim 10, wherein the energy storage device further comprises:
a first acquisition module, configured to acquire the system upgrading installation file;
a first upgrading module, configured to upgrade the energy storage system according to the system upgrading installation file; and
a storage module, configured to store the system upgrading installation file into the configuration region of the energy storage system after upgrading of the energy storage system succeeds.

12. The energy storage device according to claim 11, wherein the energy storage device further comprises:
a verification module, configured to verify completeness and correctness of the system upgrading installation file;
a second acquisition module, configured to reacquire the system upgrading installation file when verification of the system upgrading installation file fails; and
a second upgrading module, configured to upgrade the energy storage system according to the system upgrading installation file when the verification of the system upgrading installation file succeeds.

13. The energy storage device according to claim 10, where in the energy storage device further comprises:
a second detection module, configured to re-detect the state of the target file after the first processing module updates the target file; and
a second processing module, configured to update the target file according to a factory configuration system file of the energy storage system when the state of the target file is the missing state or the corrupted state.

14. The energy storage device according to claim 11 or 12, wherein the energy storage device further comprises:
a second starting module, configured to restart the energy storage system after upgrading of the energy storage system fails.

15. The energy storage device according to claim 10 or 11, wherein the energy storage device further comprises:
a third detection module, configured to cyclically detect the running state of the target file of the energy storage system according to a preset period; and
a third processing module, configured to update the target file according to the system upgrading installation file stored in the configuration region of the energy storage system when the abnormal running state of the target file is detected.

16. The energy storage device according to claim 15, wherein the energy storage device further comprises:
a fourth detection module, configured to re-detect the running state of the target file after the third processing module updates the target file; and
a fourth processing module, configured to update the target file according to a factory configuration system file of the energy storage system if the running state of the target file is abnormal.

17. An energy storage device, wherein the energy storage device comprises:
a first detection module, configured to cyclically detect a running state of a target file of an energy storage system according to a preset period in a running process of the energy storage system; and
a first processing module, configured to update the target file according to a system upgrading installation file stored in a configuration region of the energy storage system when the abnormal running state of the target file is detected.

18. The energy storage device according to claim 17, wherein the energy storage device further comprises:
a second detection module, configured to re-detect the running state of the target file after the first processing module updates the target file; and
a second processing module, configured to update the target file according to a factory configuration system file of the energy storage system if the running state of the target file is abnormal.
